# FASCICULE DE BREVET EUROPEEN

(11) **EP 2 121 207 B1**
(45) Date de publication et mention de la délivrance du brevet: **31.10.2018**
(21) Numéro de dépôt: 07822789.9
(22) Date de dépôt: 21.11.2007
(51) Int. Cl.: B09B 3/00, C03B 5/00

(54) **DISPOSITIF ET PROCÉDÉ D'INERTAGE PAR FUSION PLASMA DE MATÉRIAUX TOXIQUES**
VORRICHTUNG UND VERFAHREN ZUM INERTISIEREN VON TOXISCHEN PRODUKTEN MITTELS EINES PLASMABRENNERS
DEVICE AND METHOD OF INERTING TOXIC MATERIALS BY PLASMA MELTING

(30) Priorité: 27.11.2006 FR 0655127
(43) Date de publication de la demande: 25.11.2009
(73) Titulaire: Europlasma, 40110 Morcenx (FR)
(72) Inventeur: CLERCQ-ROQUES, Louis, 40110 Morcenx (FR); BRUNEAU, Franck Emmanuel Laurent, 33620 Lapouyade (FR); ROBERT-ARNOUIL, Jean-Paul, 33700 Merignac (FR)
(74) Mandataire: Ipside
(86) Numéro de dépôt international: PCT/EP2007/062651
(87) Numéro de publication internationale: WO 2008/065031

(56) Documents cités:
- EP-A1- 0 565 420
- EP-A1- 0 959 049
- WO-A-97/18415
- FR-A1- 2 704 047
- US-A- 6 037 560

## Description

La présente invention concerne un dispositif et un procédé d'inertage par fusion plasma de produits toxiques, notamment de déchets comprenant de l'amiante.

Il est connu que les déchets amiantés, provenant en particulier du démantèlement de bâtiments, sont de nature hétérogène. Ces déchets peuvent notamment comprendre, en plus de matières minérales, des matières métalliques, des matières plastiques ou autres matières combustibles, ainsi qu'une quantité variable d'eau.

De nombreuses tentatives ont été conduites, pour procéder à l'inertage de matériaux amiantés ou de matériaux contenant de l'amiante.

Parmi ces tentatives, on peut citer la stabilisation avant mise en décharge, par dilution des fibres et poussières d'amiante dans une masse importante de liant hydraulique, puis séchage de l'ensemble ainsi obtenu. Toutefois, ce procédé d'inertage pose le problème de la tenue sur le long terme du matériau résultant, cette tenue étant aléatoire.

On connaît également par les brevets EP 0 484 866 et EP 0 344 563, des procédés visant à inactiver des déchets industriels de l'amiante par traitement à moyenne température, entre 500 et 900°C. Toutefois, ces procédés ne permettent pas davantage de garantir l'innocuité des produits issus du traitement.

En réalité, seuls des procédés d'inertage par fusion, c'est-à-dire des procédés consistant à porter les déchets amiantés à haute température permettent de s'assurer de l'élimination du caractère nocif et cancérigène des matériaux amiantés.

En effet, l'amiante est essentiellement constitué de silicates mixtes de magnésium et de calcium de composition variable, dont la température de fusion est supérieure à 1500°C.

En portant les déchets industriels à haute température, typiquement 1600°C, on leur fait subir une fusion conduisant à un produit inerte de type verre.

Les exemples qui suivent décrivent les différentes tentatives qui se sont traduites le plus souvent par des unités de démonstration qui n'ont pas abouti à une exploitation industrielle, rarement à des unités en exploitation, cependant insatisfaisantes au plan opérationnel comme au plan des coûts d'investissement et opératoires.

Il est connu de mélanger et de dissoudre de l'amiante à de grandes quantités de verre dans des fours à flamme, nécessitant l'utilisation additionnelle de fondants très efficaces, tels que le borax, mais aussi très agressifs pour les réfractaires classiquement utilisés.

Par ailleurs, les fours à flamme entraînent généralement des fibres et poussières d'amiante non fondues, ce qui nécessite leur récupération par des traitements de fumées très coûteux.

Il est également connu, par le brevet FR 2 668 726, un procédé de chauffage par induction, consistant à placer l'amiante à traiter dans un creuset contenant déjà de l'amiante fondu, de façon à former une couche épaisse qui arrête le rayonnement du bain fondu.

Dans ces conditions, la couche d'amiante descend ainsi lentement sous son propre poids au fur et à mesure de sa fusion. Un générateur à hautes fréquences entre 200 et 600 kHz, est utilisé pour maintenir le bain fondu de manière qu'il apporte suffisamment d'énergie pour faire fondre l'amiante de la couche supérieure.

Parmi les inconvénients d'un tel procédé, on relèvera la nécessité de l'utilisation de fondant, l'amorçage du bain fondu initial par des moyens annexes et la faible capacité de traitement puisque la puissance est limitée à moins de 100 KW.

Une autre méthode, décrite dans la demande de brevet FR 2 853 846, consiste à soumettre directement les produits silicatés à un champ électromagnétique haute fréquence compris entre 20 et 300 MHz, pour assurer le chauffage diélectrique jusqu'à atteindre la température de fusion en vue d'obtenir la vitrification, nécessitant cependant l'incorporation de fondant, par exemple du sodium sous forme de sel marin.

Un autre procédé, décrit dans la demande de brevet WO 9733840, combine une chambre de préchauffage et une chambre de fusion pour le
traitement par vitrification de déchets contenant de l'amiante. Les modes de chauffage, par brûleurs air-gaz pour le préchauffage, par brûleurs oxy-gaz pour la fusion, ainsi que le trajet des gaz traités se traduisent par une installation très complexe et coûteuse, y compris sur le mode de sélection des déchets à l'entrée de la chambre de préchauffage. Enfin, rien ne garantit l'absence de poussières et de fibres dans les fumées en raison de l'entraînement des gaz à contre-courant.

Il existe encore d'autres modes de traitement par fusion, généralement par la mise en oeuvre d'oxybrûleurs (brevet JP 2001317713 et brevet DE 4 443 090) qui n'offrent pas plus de garanties quant à l'obtention d'un produit inerte et qui n'évitent pas la possibilité d'entraînement de résidus poussiéreux et fibreux dans les fumées.

On connaît dans l'état de la technique la demande de brevet français N° FR 2 704 047 qui décrit un dispositif de traitement de déchets, notamment de déchets hospitaliers, comportant une chambre de gazéification dans laquelle sont introduits les déchets pour y subir un dégazage et une combustion, une chambre de post-combustion des gaz issus de la chambre de gazéification et une chambre de fusion dans laquelle les scories provenant de la chambre de gazéification sont exposées à une haute température en vue de leur vitrification.

On connaît également dans l'état de la technique la demande de brevet européen N° EP 0 465 420 qui décrit un procédé de vitrification de déchets enfermés dans un conteneur, ledit conteneur étant réalisé en un matériau de température de fusion Td, ledit procédé comprend les étapes consistant, dans un four porté à une température moyenne Tf supérieure à Tc par un générateur haute température à jet de chaleur dirigé selon un axe D et dont la température de jet est Tj, à disposer l'axe D dudit jet de chaleur selon un angle avec la normale au four variant de 15 à 20°, à placer le conteneur dans le four, la différence de température Tf-T, étant ajustée de telle sorte que, dans une première étape précédant la fusion du conteneur, ledit jet de chaleur amène les déchets confinés dans ledit conteneur à une température Td supérieure à la température moyenne Tf du four.

On connaît également dans l'état de la technique la demande de brevet européen N° EP 0 959 049 qui décrit un procédé et un appareil pour la conversion thermique de résidus. Des substances résiduelles sont introduites dans une zone supérieure du réacteur à haute température avec de l'air ou de l'oxygène au moyen d'une unité d'alimentation, et sont converties en scorie liquide et du gaz. La fraction fine des substances résiduelles est convertie dans un espace libre au-dessus du bain de fusion, tandis que la fraction grossière est convertie dans le bain de masse fondue. Le liquide coule sous un élément de retenue et sur un élément de trop-plein. Via une ouverture de sortie, il est retiré du réacteur avec le gaz.

D'une manière générale, toutes les installations et procédés précédemment cités ne sont pas exploités industriellement. Par ailleurs, leur capacité de traitement est également très limitée.

Un site plasma thermique, basé sur l'utilisation de torches à arc non transféré, a été exploité pour traiter des matériaux contenant de l'amiante, comprenant une chambre de fusion alimentée par des sacs contenant les déchets, introduits par gravité. Bien que l'objectif d'inertage ait été atteint en exploitation commerciale, des difficultés constructives et opératoires ont été notées, en particulier la durée de vie insuffisante des réfractaires ainsi que la conduite parfois défectueuse du procédé en raison des fluctuations de débit de la phase gazeuse liée à la vaporisation de la matière organique à chaque introduction de sacs contenant les déchets. On a constaté par ailleurs que le temps de séjour des déchets à traiter dans ces sites est souvent long. Il peut atteindre plusieurs heures.

L'objectif de la présente invention est donc de proposer un dispositif et un procédé pour l'inertage par fusion plasma de produits toxiques permettant de réduire le temps de séjour de la charge à traiter pour le rapprocher du temps de séjour théorique et ainsi augmenter la capacité de traitement du dispositif pour une puissance donnée.

Un autre objet de la présente invention est un procédé d'inertage par fusion plasma permettant de réduire la puissance plasma générée par les torches plasma à arc non transféré tout en maintenant une température de fusion optimale pour le traitement de la charge à traiter.

Cette réduction de la puissance plasma est avantageusement obtenue par l'injection dans l'enceinte de fusion d'un comburant, tel qu'un fluide gazeux oxydant, favorisant la combustion de la matière carbonée présente dans la charge à traiter. Le taux d'éléments infondus est par ailleurs ainsi fortement réduit.

Un autre but de la présente invention est d'obtenir un produit final vitrifié présentant très peu d'éléments infondus pour favoriser sa valorisation.

A cet effet, l'invention concerne un procédé d'inertage par fusion plasma de produits toxiques, notamment de matière amiantée selon la revendication 1.

L'introduction en continu de la charge broyée permet de réduire les chocs thermiques préjudiciables à la durée de vie des réfractaires. On entend par "charge broyée à traiter", une charge broyée dont la composition est vitrifiable. La charge broyée présente une granulométrie comprise entre 100 µm et 200 millimètres.

Dans différents modes de réalisation particuliers de ce procédé d'inertage par fusion plasma, chacun ayant ses avantages particuliers et susceptibles de nombreuses combinaisons techniques possibles:
- on oriente le dard plasma généré par chaque source plasma montée sur l'enceinte de fusion dans la direction de la zone du bain de fusion où tombe les charges broyées à traiter,
- la zone d'impact de chaque dard plasma avec le bain de fusion est éloignée des parois de l'enceinte de fusion d'une distance permettant d'éviter la génération de points chauds sur ces parois,
- on envoie le dard plasma généré par la source plasma montée dans la partie aval de l'enceinte d'affinage et de coulée, le long d'un axe centré sur l'orifice de communication entre l'enceinte d'affinage et de coulée et l'enceinte de fusion,
- la charge broyée à traiter est formée préalablement à l'étape a) par broyage d'un mélange de déchets dont la composition permet de minimiser la température de fusion de ce mélange,

On s'assure que dans cette charge, la part combustible est répartie de manière homogène.

L'un des intérêts du dispositif faisant l'objet de la présente invention réside dans le fait que les matériaux amiantés traités peuvent contenir une quantité d'amiante variable, la fraction complémentaire étant organique avec de préférence un contenu carboné. La charge broyée à traiter peut encore comprendre des matières minérales et organiques.

Enfin, le fait de traiter à haute température permet d'éviter la formation de dioxines, notamment quand il s'agit de matériaux amiantés à fort contenu organique.

Avantageusement, le fluide gazeux oxydant est de l'air. Ce fluide gazeux oxydant est de préférence introduit de manière continue dans l'enceinte de fusion pour former une couche de protection thermique protégeant les éléments réfractaires. Cette introduction peut se faire en plusieurs emplacements de l'enceinte de fusion, avantageusement en vortex.
- le fluide gazeux oxydant est dirigé vers la partie de l'enceinte de fusion où est introduite la charge broyée à traiter,

Ce mode de réalisation assure, en plus de la protection des éléments réfractaires, une introduction d'oxygène dans la charge broyée à traiter pour favoriser la combustion de la matière carbonée présente dans cette charge et apporter ainsi une énergie supplémentaire dans le bain de fusion.
- on mesure la température du bain de fusion et on minimise la puissance plasma générée par les sources plasma montées sur l'enceinte de fusion tout en maintenant une température de fusion dans ledit bain.

L'énergie supplémentaire résultant de l'introduction de ce comburant permet à l'opérateur ou aux opérateurs du dispositif d'ajuster les paramètres de fonctionnement des torches plasma à arc non transféré pour réduire, voire minimiser, la puissance plasma générée par celles-ci tout en maintenant une température dans le bain de l'enceinte de fusion apte à assurer la fusion de la charge broyée à traiter introduite en continu.

Le procédé de l'invention permet avantageusement l'élimination de la production de dioxines et furannes, en raison des températures élevées atteintes dans les bains de fusion et d'affinage, associés à un temps de séjour en conformité avec les législations existantes.

Ce procédé permet également la minimisation de la production d'oxydes d'azote par l'injection en continu de la charge broyée conduisant à la production de fumées d'un débit constant, en combinaison avec l'injection d'un fluide gazeux oxydant à température ambiante, c'est-à-dire un gaz froid, qui fixe l'oxygène sur le carbone de préférence à l'azote.

La source ou les sources plasma à arc non transféré sont disposées dans l'enceinte de fusion de manière à apporter, dans la zone de réaction, l'énergie de fusion et de brassage de la partie minérale de la charge broyée à traiter, aussi bien que l'énergie de gazéification de la partie organique de cette charge. Il en résulte respectivement un bain liquide à haute température et des fumées également à haute température.

Le transfert thermique de l'énergie plasma vers la matière entrante est optimisé, résultant d'une part du flux thermique de convection entre l'écoulement plasma et ladite matière, d'autre part du flux thermique rayonné par la paroi réfractaire à haute température.

La ou les sources plasma sont également disposées dans l'enceinte de fusion d'une part de manière que le flux de matière de la charge broyée introduit avantageusement par gravité dans une zone au dessus du bain et éloignée du ou des dards plasma puisse se mélanger continûment et intimement avec le bain de fusion sans être entraîné dans les fumées, d'autre part de manière que le brassage du bain résultant des effets mécaniques du ou des dards plasma produise une homogénéisation dudit bain de fusion continûment alimenté par la matière entrante de la charge broyée à traiter.

La matière à traiter peut être au moins en partie solide, et/ou liquide/et ou gazeuse.

L'invention concerne également un dispositif pour la mise en oeuvre du procédé d'inertage par fusion plasma selon la revendication 8.

Le dernier dard plasma assure également un maintien en température de fusion du bain d'affinage dans l'enceinte de fusion et de coulée.

Dans différents modes de réalisation particuliers de ce dispositif, chacun ayant ses avantages particuliers et susceptibles de nombreuses combinaisons techniques possibles:
- le dispositif comprend deux sources plasma à arc non transféré montées chacune sur une ouverture latérale de l'enceinte de fusion, ces sources étant destinées à émettre des dards plasma frappant le bain de fusion de manière asymétrique pour brasser le bain de fusion,

Ce brassage du bain par mise en rotation du bain de fusion dans les zones d'impact des dards plasma assure l'homogénéisation du bain ainsi que l'élimination des résidus infondus éventuels.
- le dispositif comprend des appareils de mesure pour contrôler ledit bain de fusion pour permettre à au moins un opérateur de commander en temps réel la puissance plasma générée par lesdites sources plasma,

Par ailleurs, le dispositif peut comporter des moyens pour mesurer la température dans le bain d'affinage, ainsi que la hauteur de ce bain, pour programmer le cycle de coulée des produits fondus.
- ces orifices sont répartis, de manière régulière ou non, le long d'un axe vertical, cet axe vertical étant placé entre la ou l'une des sources plasma de l'enceinte de fusion et le port d'introduction de la charge broyée à traiter,
- le dispositif comprend des moyens d'introduction en continu de ladite charge broyée à traiter reliés audit port d'introduction,

Ces moyens d'introduction en continu de la charge broyée à traiter sont avantageusement choisis dans le groupe comprenant une vis d'enfournement et un poussoir.
- les sources plasma sont montées sur les ouvertures de sorte que le dard plasma émis par chacune de ces sources est incliné d'un angle compris entre 15 et 30° par rapport à un plan horizontal.

Un matériau vitrifié est obtenu par le procédé d'inertage par fusion plasma de produits toxiques tel que décrit précédemment.

Ce matériau comprend un taux d'éléments infondus inférieur ou égal à 0,1 pour cent massique.

Enfin l'invention concerne l'utilisation du dispositif tel que décrit précédemment pour le traitement de déchets comprenant de l'amiante, selon la revendication 17.

L'invention sera décrite plus en détail en référence aux dessins annexés dans lesquels:
- la figure 1 montre une vue partielle en coupe du dispositif d'inertage par fusion plasma de produits toxiques selon un mode de réalisation particulier de l'invention;
- la figure 2 est une représentation schématique du dispositif d'inertage de la Figure 1 vue en coupe de dessus;
- la figure 3 représente schématiquement une vue partielle de l'enceinte de fusion du dispositif de la Figure 1 montrant l'axe de propagation du dard plasma incliné vers le bain de fusion et orienté de biais;
- la figure 4 montre une vue en coupe de dessus d'une enceinte de fusion selon un autre mode de réalisation de l'invention;

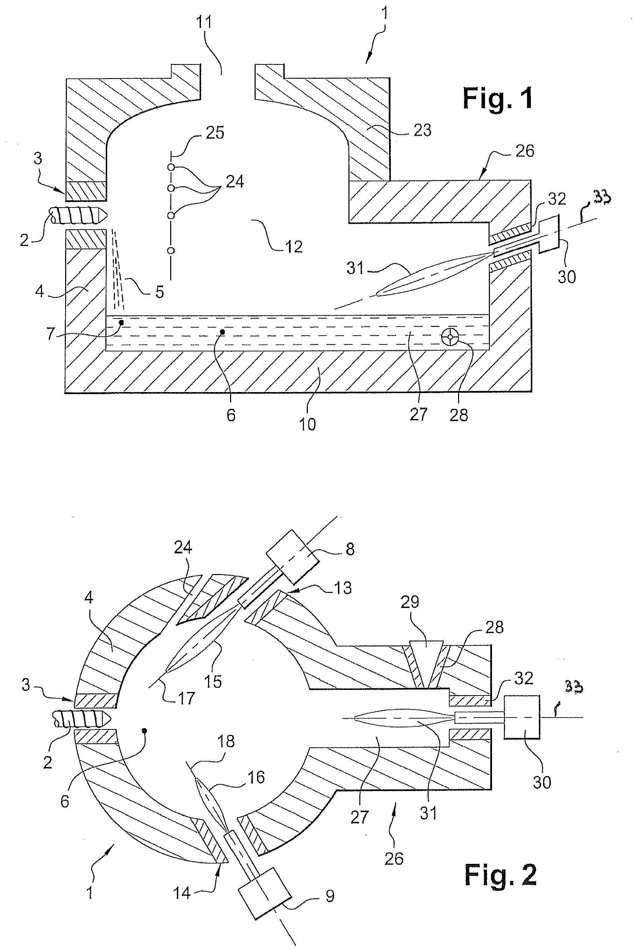

La Figure 1 montre une vue partielle en coupe d'un dispositif d'inertage par fusion plasma selon un mode de réalisation particulier de l'invention. Ce dispositif comporte une enceinte, ou four, de fusion 1 de forme cylindrique. Cette enceinte peut cependant avoir tout autre forme telle qu'ovoïde.

L'enceinte de fusion 1 est alimentée de manière continue en amont par un flux de matière solide amiantée broyée au moyen d'un élément d'injection 2. Un port d'introduction 3 formé par une ouverture de section circulaire aménagée dans un ouvreau positionné dans la paroi latérale 4 de l'enceinte de fusion 1 permet d'injecter la charge broyée à traiter 5 dans l'enceinte de fusion 1.

Cet élément d'injection 2 est choisi pour son aptitude à délivrer un flux maîtrisé, à une pression et une température imposées par les conditions de pression et de température régnant dans l'enceinte de fusion 1. A titre d'exemple, une vis refroidie 2 pourra être mise en oeuvre. Il est également possible de choisir des moyens d'injection par poussoir ou par transport pneumatique sous pression.

La charge broyée 5 injectée dans l'enceinte de fusion 1 tombe par gravité dans un bain de fusion 6. La zone d'impact de cette charge broyée 5 avec le bain de fusion 6 constitue une zone de mélange 7. Cette dernière est une zone où se mélange la charge broyée 5 à traiter avec celle qui a déjà été portée à haute température à l'état liquide par l'apport d'énergie de torches à plasma à arc non transféré 8, 9 (figure 2) dans le bain de fusion liquide 6 contenu dans un creuset 10.

L'enceinte de fusion 1 comprend un port de sortie 11 placé dans la partie supérieure de l'enceinte de fusion 1, lequel reçoit la fraction vaporisée de la charge broyée, qui résulte de réactions thermochimiques dans les zones 7, 6 et 12 à haute température, typiquement comprises entre 1400 et 1600° C, de l'enceinte de fusion 1. Ce port de sortie 11 est relié à un circuit d'extraction et de traitement des fumées.

Les torches à plasma à arc non transféré 8, 9 sont montées sur des ouvertures de section circulaire et/ou ovoïde aménagées dans des ouvreaux 13, 14 dans la paroi latérale 4 de l'enceinte de fusion 1.

Ces torches à plasma à arc non transféré 8, 9 sont montées sur l'enceinte de fusion 1 de manière que le dard plasma 15, 16, sensiblement cylindrique, émis par chaque source soit envoyé directement dans le bain de fusion 6 en se propageant le long d'un axe de propagation 17, 18.

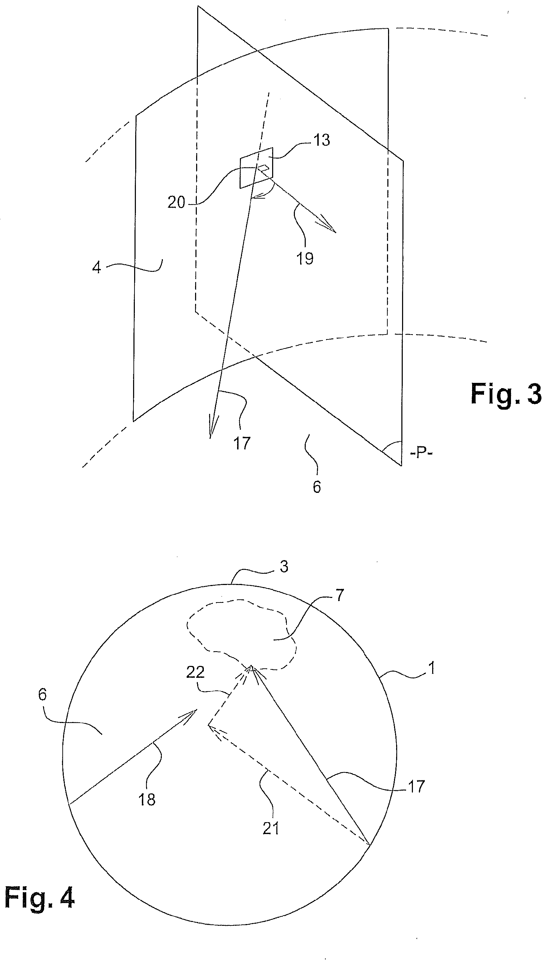

Cet axe de propagation 17, 18 se trouve de plus hors du plan vertical P contenant la normale 19 à la paroi 4 au point d'intersection 20 de cet axe 17, 18 avec la paroi 4 de l'enceinte de fusion 1 (Figure 3). Ainsi, chaque dard plasma 15, 16 est envoyé de manière inclinée vers le bain de fusion 6 et de biais pour brasser celui-ci.

Plus précisément, les dards plasma 15, 16 sont orientés vers le bain de fusion 6, par exemple, avec un angle de l'ordre de 20° par rapport à l'horizontale, pour bénéficier d'un transfert thermique élevé entre le plasma et la matière, celle à fondre et celle déjà fondue, par un impact mécanique direct entre les dards plasma et la matière, qui résulte de la vitesse élevée du plasma, par exemple de l'ordre de 400 mètres/seconde.

De plus, chaque axe de propagation 17, 18 des dards plasma 15, 16, lorsqu'il est projeté sur un plan horizontal, combine une composante radiale 21 et une composante tangentielle 22 par rapport à la paroi 4 de l'enceinte 1, pour induire un brassage au coeur du bain. Ce brassage peut être optimisé d'une part par des moyens mécaniques de réglage de la position axiale de chaque torche à plasma à arc non transféré et d'autre part par une dissymétrie d'impact du bain de fusion 6 par les deux dards plasma 15, 16. Chacun d'eux présente ainsi sa propre composante radiale 21 et sa propre composante tangentielle 22 de manière à induire un brassage du bain par rotation de la phase liquide.

Avantageusement, ces torches 8, 9 sont montées sur l'enceinte de fusion 1 de sorte que les dards plasma 15, 16 sont envoyés dans la direction de la zone 7 du bain de fusion 1 où tombe les charges broyées 5 à traiter (Figure 4).

Cette configuration et le mode opératoire qui en résulte accélèrent avantageusement le mélange du flux de matière injectée par gravité dans la zone de mélange 7 du bain de fusion 6. Il en résulte un traitement plus homogène en température -jusqu'à 1600° C-, une diminution du temps de fusion et une minimisation du pourcentage d'infondus dans le bain de fusion 6.

Par ailleurs, les valeurs des composantes radiales 21 et tangentielles 22 sont choisies de manière à ce que les zones d'impact des dards plasma au niveau du bain soient suffisamment éloignées des parois 4 de l'enceinte 1 pour ne pas créer de points chauds préjudiciables à la tenue des éléments réfractaires recouvrant les parois.

La paroi latérale 4, le creuset 10 et la voûte 23 de l'enceinte de fusion 1 sont tous revêtus, côté interne, par des matériaux réfractaires à haute tenue en température, par exemple à base de chrome/corindon.

Les torches 8, 9 fonctionnent de préférence avec de l'air pressurisé et traité comme gaz plasmagène, utilisant des moyens de compression et de traitement à partir de l'air atmosphérique. Il est également possible d'utiliser un autre gaz plasmagène, par exemple en modifiant les pourcentages d'oxygène et d'azote par rapport à ceux de l'air atmosphérique.

L'enceinte de fusion 1 comporte des orifices d'injection 24 d'un fluide gazeux oxydant, ces orifices 24 étant reliés à un circuit d'injection dudit fluide gazeux oxydant (non représenté). Ce dernier peut comprendre un compresseur pour injecter ledit fluide sous forme pressurisée. Les orifices 24 sont orientés de sorte que le fluide gazeux oxydant est injecté tangentiellement à la paroi latérale 4 de l'enceinte de fusion 1 en direction de la partie de l'enceinte de fusion comprenant le port d'introduction 3 d'une charge broyée à traiter. Ces orifices 24 sont répartis, de manière régulière ou non, le long d'un axe vertical 25, cet axe vertical 25 étant placé entre la source plasma 8 de l'enceinte de fusion 1 et le port d'introduction 3 de la charge broyée à traiter 5 (Figure 2).

Ce flux de gaz à température ambiante, préférentiellement de l'air, forme un film d'air servant d'isolant thermique recouvrant la paroi interne de l'enceinte de fusion 1.

Des moyens de mesure et de contrôle permettent de capter la pression et la température dans l'enceinte de fusion 1 par des sondes de pression et de températures, la température du bain par pyromètre optique, le suivi de la fusion de la charge broyée 5 par un endoscope (non représentés). Les mesures sont utilisées, par exemple, sous le contrôle d'une unité de traitement, par exemple un microprocesseur programmé à cet effet, pour déterminer la puissance électrique des torches 8, 9 et/ou le débit d'introduction dans le bain de fusion 6 de la charge broyée à traiter, dans le but de contrôler et d'optimiser le processus de fusion et, en particulier, la puissance électrique plasma nécessaire et suffisante à la fusion de la charge broyée.

L'enceinte de fusion 1 est en communication de fluide avec la partie amont d'une enceinte d'affinage et de coulée 26. L'enceinte d'affinage et de coulée 26 présente une forme sensiblement rectangulaire mais peut avoir tout autre forme choisie dans le groupe comprenant parallélépipédique, tronconique, cylindrique et ovoïde. L'enceinte d'affinage et de coulée 26 est de préférence placée à l'opposé du port d'introduction 3 de ladite charge broyée 5 à traiter.

Cette enceinte d'affinage et de coulée 26 reçoit un bain d'affinage 27 et comporte un orifice de coulée 28 placé de préférence latéralement à cette enceinte. L'orifice de coulée 28 a une section de préférence tronconique et est obturé par un obturateur 29, de préférence de forme conique et refroidi.

L'enceinte d'affinage et de coulée 26 comprend dans sa partie aval une ouverture à laquelle est reliée une source plasma à arc non transféré 30. Cette source plasma 30 est montée de manière à émettre un dard plasma 31 incliné vers la partie inférieure de l'enceinte d'affinage et de coulée 26 pour frapper directement le bain d'affinage 27 dans la partie amont de l'enceinte d'affinage et de coulée 26. Ce dard permet ainsi d'impulser une quantité de mouvement à d'éventuels éléments infondus pour les repousser vers le bain de fusion 6. Il permet également de maintenir une température de fusion dans le bain d'affinage 27. Le dard plasma 31 se propage le long d'un axe principal 33 formant un angle compris typiquement entre 15° et 30° par rapport à l'horizontale.

Le bain d'affinage 27 est ainsi directement alimenté de manière continue par le bain en fusion 6, pour produire un bain liquide de section préférentiellement rectangulaire. Ce dernier est maintenu en température par l'apport d'énergie thermique produite par la torche plasma 30 installée dans un ouvreau 32 de section circulaire.

Quand l'obturateur 29 est en place, l'apport d'énergie par la torche plasma 30 conduit à éliminer tout résidu infondu éventuel, optimisant ainsi le processus de fusion pour l'élimination totale, dans le cas de déchets amiantés, de l'amiante à l'état de poussières ou à l'état fibreux.

Quand l'obturateur 29 est retiré, préférentiellement par des moyens hydrauliques, le bain liquide 27 s'écoule en continu à l'atmosphère par l'orifice de coulée 28. L'apport d'énergie par la torche 30 permet cette coulée en continu sans risque d'un figeage qui pourrait résulter de la mise en contact de la matière en fusion avec l'atmosphère ambiante à plus basse température. Le matériau se refroidit ultérieurement à l'atmosphère, se transformant en un matériau vitrifié atoxique.

L'enceinte d'affinage et de coulée 26 est revêtue, sur sa face interne chaude, d'éléments réfractaires à haute tenue en température, par exemple à base de chrome/corindon. Les éléments réfractaires de cette enceinte étant moins sollicités que ceux équipant l'enceinte de fusion 1, en raison de moindres contraintes aérothermiques, il n'est pas nécessaire d'installer des moyens additionnels pour augmenter la durée de vie de ces éléments réfractaires.

Des moyens de mesure et de contrôle permettent de capter la pression et la température dans l'enceinte d'affinage et de coulée 26, le niveau du bain par pigeage. Ces mesures sont utilisées pour déterminer le début et la durée de la phase de coulée.

Dans un mode de mise en oeuvre particulier, et à titre purement illustratif, une installation de traitement d'environ 40 tonnes par jour présente les principales caractéristiques dimensionnelles suivantes :
- l'enceinte de fusion 1 a un diamètre intérieur de l'ordre de 3 mètres, pour une hauteur comprise entre 2 et 3 mètres,
- la chambre d'affinage, de forme parallélépipédique, a une largeur de l'ordre de 1,5 mètre, pour une hauteur comprise entre 1,5 et 2 mètres,
- la longueur hors tout, dans un plan horizontal, de l'ensemble enceinte/chambre d'affinage, et de l'ordre de 4 à 5 mètres,
- la hauteur du bain est comprise entre 200 et 300 millimètres.

La conduite du procédé, qui résulte des moyens de mesure et de contrôle déjà décrits, de plus facilité par l'injection continue de matière broyée lissant les débit des fumées, peut encore être amélioré, à titre d'exemple, par une sélection des lots de déchets contenant une fraction massique vaporisable sensiblement constante et de même nature chimique.

De plus, il est clair que l'utilisation du plasma à haute température (enthalpie de l'ordre de 6 à 7 Mégajoules/kg) conduit à minimiser le débit total des fumées par une contribution limitée du plasma à ce débit total. Tous ces facteurs contribuent à optimiser le traitement des fumées extrait de l'enceinte de fusion 1 par le port de sortie 11.

Cette installation de traitement de 40 tonnes par jour de déchets amiantés broyés requiert une puissance totale électrique plasma de l'ordre de 1,5 Mégawatt, répartie en deux fois 500 kW pour deux torches plasma à arc non transféré 8, 9 montées sur l'enceinte de fusion 1 et 500 kW pour la torche plasma à arc non transféré 30 montée en aval de l'enceinte d'affinage et de coulée 26.

Le débit de gaz oxydant à température ambiante injecté dans l'enceinte de fusion 1 est dans la gamme 800 à 1200 Nm³/heure.

Pour un déchet amianté standard, par exemple un mélange à environ 50 % de déchets pulvérulents et 50 % de déchets liés, la fraction vaporisable du déchet représente un débit de l'ordre de 900 à 1000 Nm3/heure.

Pour une puissance plasma de l'ordre de 1,5 Mégawatt électrique, le débit de gaz plasmagène est de l'ordre de 450 à 500 Nm³/heure, ce qui correspond à une enthalpie du plasma de l'ordre de 6 à 7 Mégajoules/kg.

Le débit total des fumées est dans la gamme 2500 à 3000 Nm³/heure. Dans ces conditions opérationnelles, le taux d'oxyde d'azote rejeté à l'atmosphère est inférieur au seuil requis de 400 mg/Nm³.

Il est à noter que le bilan énergétique ressort à environ 1 KWh/kg. Comme les torches à plasma ont elles même un rendement de l'ordre de 80 à 85 % (rapport entre l'énergie thermique délivrée et l'énergie électrique consommée), pris en compte dans le bilan énergétique, on peut conclure à la très grande efficacité énergétique du procédé d'inertage par fusion plasma de l'invention.

Le produit vitrifié résultant de la fusion, par exemple de 20 à 25 tonnes par jour pour une capacité de traitement de 40 tonnes par jour, est totalement inerte et en particulier plus aucune trace d'amiante à l'état fibreux ou à l'état poussiéreux ne peut être détecté. C'est donc un produit valorisable, par exemple, en raison de ses propriétés mécaniques, pour la réalisation de soubassements routiers.

## Revendications

1. Procédé d'inertage par fusion plasma de produits toxiques, **caractérisé en ce qu'**il comprend les étapes suivantes :
a) on introduit de manière continue une charge broyée (5) vitrifiable à traiter dans un bain de fusion (6), ladite charge broyée (5) tombant par gravité dans ledit bain, ledit bain (6) étant placé dans une enceinte de fusion (1) ayant un volume interne délimité par des parois recouvertes au moins partiellement d'éléments réfractaires,
b) on envoie directement au moins un dard plasma (15, 16) dans ledit bain de fusion (6), ledit dard plasma étant de plus dirigé le long d'un axe de propagation (17,18) se trouvant hors du plan vertical (P) contenant la normale (19) à la paroi au plan d'intersection (20) dudit axe de propagation (17,18) avec ladite paroi (4) et ledit dard plasma étant envoyé de manière inclinée vers ledit bain de fusion et de biais pour brasser ledit bain de fusion, chaque dard plasma (15, 16) étant généré par une source plasma à arc non transféré (8,9) montée sur ladite enceinte de fusion (1),
c) on envoie au moins une partie du bain de fusion (6) vers un bain d'affinage (27), ledit bain d'affinage (27) étant placé dans une enceinte d'affinage et de coulée (26) en communication dans sa partie amont avec ladite enceinte de fusion (1), ladite enceinte d'affinage et de coulée (26) ayant un volume interne délimité par des parois recouvertes au moins partiellement d'éléments réfractaires,
d) on envoie un dard plasma (31) directement dans le bain d'affinage (27) vers la partie amont de ladite enceinte d'affinage et de coulée (26) en communication avec ladite enceinte de fusion (1) pour repousser vers le bain de fusion (6) d'éventuels éléments infondus, ledit dard plasma (31) étant généré par une source plasma à arc non transféré (30) montée dans la partie aval de ladite enceinte d'affinage et de coulée (26), et
e) on injecte tangentiellement aux parois (4) de l'enceinte de fusion (1), sur au moins une partie de ces parois, un fluide gazeux oxydant à température ambiante.

2. Procédé selon la revendication 1, **caractérisé en ce qu'**on oriente le dard plasma généré par chacune desdites sources plasma (8, 9) montées sur ladite enceinte de fusion (1) dans la direction de la zone dudit bain de fusion (6) où tombe lesdites charges broyées à traiter.

3. Procédé selon la revendication 1 ou 2, **caractérisé en ce que** la zone d'impact de chaque dard plasma avec ledit bain de fusion (6) est éloignée des parois de ladite enceinte de fusion (1) d'une distance permettant d'éviter la génération de points chauds sur lesdites parois.

4. Procédé selon l'une quelconque des revendications 1 à 3, **caractérisé en ce que** ladite charge broyée (5) à traiter est formée préalablement à l'étape a) par broyage d'un mélange de déchets dont la composition permet de minimiser la température de fusion de ce mélange.

5. Procédé selon l'une quelconque des revendications 1 à 4, **caractérisé en ce qu'**on envoie le dard plasma (31) généré par ladite source plasma (30) montée dans la partie aval de ladite enceinte d'affinage et de coulée (26), le long d'un axe (33) centré sur l'orifice de communication entre ladite enceinte d'affinage et coulée (26) et ladite enceinte de fusion (1).

6. Procédé selon la revendication 1, **caractérisé en ce que** ledit fluide gazeux oxydant est dirigé vers la partie de l'enceinte de fusion (1) où est introduite la charge broyée (5) à traiter.

7. Procédé selon la revendication 1 ou 6, **caractérisé en ce qu'**on mesure la température du bain de fusion (6) et on minimise la puissance plasma générée par lesdites sources plasma montées sur ladite enceinte de fusion (1) tout en maintenant une température de fusion dudit bain.

8. Dispositif pour la mise en oeuvre du procédé d'inertage par fusion plasma de produits toxiques selon l'une quelconque des revendications 1 à 7 comprenant une enceinte de fusion (1) ayant un volume interne délimité par des parois (4), lesdites parois étant au moins partiellement recouvertes d'éléments réfractaires, ladite enceinte comprenant un port d'introduction (3) d'une charge broyée (5) vitrifiable à traiter, **caractérisé en ce qu'**il comprend :
- au moins une source plasma à arc non transféré (8, 9) destinée à générer un dard plasma (15, 16), ladite source plasma (8, 9) étant reliée à une ouverture latérale de ladite enceinte (1),
- ladite source plasma (8, 9) étant montée sur ladite enceinte de fusion (1) de manière que ledit dard plasma (15, 16) émis par ladite source soit incliné vers la partie inférieure de ladite enceinte (1) destinée à recevoir un bain de fusion (6) et se propage le long d'un axe de propagation (17, 18) se trouvant hors du plan vertical (P) contenant la normale (19) à la paroi au point d'intersection (20) dudit axe de propagation (17, 18) avec ladite paroi (4) et de manière à ce que ledit dard plasma (15, 16) émis par ladite source soit envoyé de manière incliné vers la partie inférieure de ladite enceinte destinée à recevoir un bain de fusion et de biais pour brasser ledit bain de fusion (6),
- ladite enceinte de fusion (1) est en communication de fluide avec la partie amont d'une enceinte d'affinage et de coulée (26), ladite enceinte d'affinage et de coulée (26) ayant un volume interne délimité par des parois recouvertes au moins partiellement d'éléments réfractaires, ladite enceinte d'affinage et de coulée (26) étant destinée à recevoir un bain d'affinage (27),
- ladite enceinte d'affinage et de coulée (26) comprend dans sa partie aval une ouverture à laquelle est reliée une source plasma à arc non transféré (30), ladite source étant montée de manière à émettre un dard plasma (31) incliné vers la partie inférieure de ladite enceinte d'affinage et de coulée (26) pour frapper directement ledit bain d'affinage (27) dans la partie amont de ladite enceinte d'affinage et de coulée (26) de manière à repousser d'éventuels éléments infondus vers ledit bain de fusion (6), et
- ladite enceinte de fusion (1) comporte des orifices d'injection (24) d'un fluide gazeux oxydant, lesdits orifices (24) étant reliés à un circuit d'injection dudit fluide gazeux oxydant et étant orientés de sorte que ledit fluide gazeux oxydant est injecté tangentiellement à la paroi latérale (4) de ladite enceinte en direction de la partie 20 de l'enceinte de fusion (1) comprenant ledit port d'introduction (3) d'une charge broyée (5) à traiter.

9. Dispositif selon la revendication 8 **caractérisé en ce qu'**il comprend deux sources plasma à arc non transféré (8,9) montées chacune sur une ouverture latérale de ladite enceinte de fusion (1), lesdites sources étant destinées à émettre des dards plasma frappant ledit bain de fusion (6) de manière asymétrique pour brasser ledit bain de fusion (6).

10. Dispositif selon la revendication 8, **caractérisé en ce que** lesdits orifices (24) sont répartis, de manière régulière ou non, le long d'un axe vertical (25), ledit axe vertical (25) étant placé entre l'une desdites sources plasma (8, 9) de l'enceinte de fusion (1) et ledit port d'introduction (3) de la charge broyée (5) à traiter.

11. Dispositif selon l'une quelconque des revendications 8 à 10, à **caractérisé en ce que** lesdites sources plasma à arc non transféré (8, 9) sont montées sur l'enceinte de fusion (1) de sorte que lesdits dards plasma (15, 16) émis par lesdites sources (8, 9) sont envoyés dans la direction de la zone dudit bain de fusion (6) où tombe lesdites charges broyées à traiter.

12. Dispositif selon l'une quelconque des revendications 8 à 11, **caractérisé en ce qu'**il comprend des appareils de mesure pour contrôler ledit bain de fusion (6) pour permettre à au moins un opérateur de commander en temps réel la puissance plasma générée par lesdites sources plasma (8, 9).

13. Dispositif selon l'une quelconque des revendications 8 à 12, **caractérisé en ce que** l'enceinte d'affinage et de coulée (26) est placée à l'opposé du port d'introduction (3) de ladite charge broyée (5) à traiter.

14. Dispositif selon l'une quelconque des revendications 8 à 13, **caractérisé en ce qu'**il comprend des moyens d'introduction (2) en continu de ladite charge broyée (5) à traiter reliés audit port d'introduction (3).

15. Dispositif selon l'une quelconque des revendications 8 à 14, **caractérisé en ce que** lesdites sources plasma (8, 9, 30) sont montées sur lesdites ouvertures de sorte que ledit dard plasma émis par chacune desdites sources soit incliné d'un angle compris entre 15 et 30° par rapport à un plan horizontal.

16. Dispositif selon l'une quelconque des revendications 8 à 15, **caractérisé en ce que** ladite enceinte d'affinage et de coulée (26) comporte un orifice de coulée (28) obturé par un obturateur (29).

17. Utilisation du dispositif selon l'une quelconque des revendications 8 à 16 pour le traitement de déchets comprenant de l'amiante.

## Patentansprüche

1. Verfahren zur Inertisierung von toxischen Produkten durch Plasmaschmelzen, **dadurch gekennzeichnet, dass** es die folgenden Schritte umfasst:
a) kontinuierliches Einführen eines zerkleinerten Füllstoffs (5), der in Glas verwandelbar ist, der in einem Schmelzbad (6) zu behandeln ist, wobei der zerkleinerte Füllstoff (5) durch Schwerkraft in das Bad fällt, wobei das Bad (6) in einer Schmelzkammer (1) platziert ist, die ein inneres Volumen aufweist, das durch Wände abgegrenzt ist, die zumindest teilweise von resistenten Elementen bedeckt sind,
b) direktes Senden mindestens eines Plasmastachels (15, 16) in das Schmelzbad (6), wobei der Plasmastachel zudem entlang einer Ausbereitungsachse (17, 18) gerichtet wird, die sich außerhalb der senkrechten Ebene (P) befindet, die die Normale (19) zur Wand an der Schnittebene (20) der Ausbreitungsachse (17, 18) mit der Wand (4) enthält, und wobei der Plasmastachel geneigt zum Schmelzbad hin gesendet wird und schräg, um das Schmelzbad durchzumischen, wobei jeder Plasmastachel (15,16) durch eine auf der Schmelzkammer (1) angeordnete Plasmaquelle mit nicht übertragenem Bogen (8, 9) erzeugt wird,
c) Senden mindestens eines Teils des Schmelzbads (6) zu einem Veredlungsbad (27), wobei das Veredlungsbad (27) in einer Veredlungs- und Fließkammer (26) platziert ist, die in ihrem vorgeschalteten Teil mit der Schmelzkammer (1) kommuniziert, wobei die Veredlungs- und Fließkammer (26) ein inneres Volumen aufweist, das durch Wände abgegrenzt ist, die zumindest teilweise von resistenten Elementen bedeckt sind,
d) direktes Senden eines Plasmastachels (31) in das Veredlungsbad (27) zum vorgeschalteten Teil des Veredlungs- und Fließkammer (26) hin, der mit der Schmelzkammer (1) kommuniziert, um eventuell nicht geschmolzene Elemente zum Schmelzbad (6) hin zu treiben, wobei der Plasmastachel (31) durch eine Plasmaquelle mit nicht übertragenem Bogen (30), die im der Veredlungs- und Fließkammer (26) nachgeschalteten Teil angeordnet ist, erzeugt wird, und
e) tangentiales Einspritzen an den Wänden (4) der Schmelzkammer (1), auf mindestens einen Teil dieser Wände, einer gasförmigen oxidierenden Flüssigkeit bei Raumtemperatur.

2. Verfahren nach Anspruch 1, **dadurch gekennzeichnet, dass** der Plasmastachel, der durch jede der Plasmaquellen (8, 9), die auf der Schmelzkammer (1) angeordnet sind, erzeugt wird, in der Richtung des Bereichs des Schmelzbads (6), in dem der zu behandelnde zerkleinerte Füllstoff fällt, gerichtet wird.

3. Verfahren nach Anspruch 1 oder 2, **dadurch gekennzeichnet, dass** der Aufprallbereich jedes Plasmastachels mit dem Schmelzbad (6) von den Wänden der Schmelzkammer (1) durch einen Abstand entfernt ist, der es erlaubt, die Bildung von warmen Punkten auf den Wänden zu verhindern.

4. Verfahren nach einem der Ansprüche 1 bis 3, **dadurch gekennzeichnet, dass** der zu behandelnde zerkleinerte Füllstoff (5) vor Schritt a) durch Zerkleinerung einer Mischung von Abfällen, deren Zusammensetzung es erlaubt, die Schmelztemperatur dieser Mischung zu minimieren, gebildet wird.

5. Verfahren nach einem der Ansprüche 1 bis 4, **dadurch gekennzeichnet, dass** der Plasmastachel (31), der von der Plasmaquelle (30), die im der Veredlungs- und Fließkammer (26) nachgeschalteten Teil angeordnet ist, erzeugt wird, entlang einer Achse (33), die auf der Kommunikationsöffnung zwischen der Veredlungs- und Fließkammer (26) und der Schmelzkammer (1) zentriert ist, gesendet wird.

6. Verfahren nach Anspruch 1, **dadurch gekennzeichnet, dass** die gasförmige oxidierende Flüssigkeit zum Teil der Schmelzkammer (1) hin, in dem der zu behandelnde zerkleinerte Füllstoff (5) eingeführt wird, gerichtet wird.

7. Verfahren nach einem der Ansprüche 1 oder 6, **dadurch gekennzeichnet, dass** die Temperatur des Schmelzbads (6) gemessen wird und dass die Plasmaleistung, die durch die auf der Schmelzkammer (1) angebrachten Plasmaquellen erzeugt wird, minimiert wird, wobei die Schmelztemperatur des Bads beibehalten wird.

8. Vorrichtung zur Durchführung einer Inertisierung von toxischen Produkten durch Plasmaschmelzen nach einem der Ansprüche 1 bis 7, umfassend eine Schmelzkammer (1), die ein inneres Volumen aufweist, dass durch Wände (4) abgegrenzt ist, wobei die Wände zumindest teilweise von resistenten Elemente bedeckt sind, wobei die Kammer einen Einführanschluss (3) eines zerkleinerten Füllstoffs (5), der in Glas verwandelbar ist, der zu behandeln ist, umfasst, **dadurch gekennzeichnet, dass** sie umfasst:
- mindestens eine Plasmaquelle mit nicht übertragenem Bogen (8, 9), die dazu bestimmt ist, einen Plasmastachel (15, 16) zu erzeugen, wobei die Plasmaquelle (8, 9) an eine seitliche Öffnung der Kammer (1) angeschlossen ist,
- die Plasmaquelle (8, 9), die auf der Schmelzkammer (1) derart angeordnet ist, dass der von der Quelle ausgegebene Plasmastachel (15, 16) zum unteren Teil der Schmelzkammer (1) hin geneigt ist, der dazu bestimmt ist, ein Schmelzbad (6) aufzunehmen, und sich entlang einer Ausbreitungsachse (17, 18) ausbreitet, die sich außerhalb der senkrechten Ebene (P) befindet, die die Normale (19) zur Wand am Schnittpunkt (20) der Ausbreitungsachse (17, 18) mit der Wand (4) enthält, und derart, dass der von der Quelle ausgegebene Plasmastachel (15, 16) zum unteren Teil der Schmelzkammer hin geneigt, der dazu bestimmt ist, ein Schmelzbad aufzunehmen, gesendet wird, und schräg, um das Schmelzbad (6) durchzumischen,
- die Schmelzkammer (1) ist in Fluidkommunikation mit dem der Veredlungs- und Fließkammer (26) vorgeschalteten Teil, wobei die Veredlungs- und Fließkammer (26) ein inneres Volumen aufweist, das durch Wände abgegrenzt ist, die zumindest teilweise von resistenten Elementen bedeckt sind, wobei die Veredlungs- und Fließkammer (26) dazu bestimmt ist, ein Veredlungsbad (27) aufzunehmen,
- die Veredlungs- und Fließkammer (26) umfasst in ihrem nachgeschalteten Teil eine Öffnung, an der eine Plasmaquelle mit nicht übertragenem Bogen (30) angeschlossen ist, wobei die Quelle derart angeordnet ist, dass sie einen Plasmastachel (31) ausgibt, der zum unteren Teil der Veredlungs- und Fließkammer (26) hin geneigt ist, um das Veredlungsbad (27) direkt im vorgeschalteten Teil des Veredlungs- und Fließkammer (26) zu stoßen, um eventuell nicht geschmolzene Elemente zum Schmelzbad (6) hin zu treiben, und
- die Schmelzkammer (1) Einspritzöffnungen (24) für eine gasförmige oxidierende Flüssigkeit enthält, wobei die Öffnungen (24) an einen Einspritzkreislauf der gasförmigen oxidierenden Flüssigkeit angeschlossen sind und derart ausgerichtet sind, dass die gasförmige oxidierende Flüssigkeit tangential an die seitliche Wand (4) der Kammer in Richtung des Teils 20 der Schmelzkammer (1), die den Einführanschluss (3) für einen zu behandelnden zerkleinerten Füllstoff (5) umfasst, eingespritzt wird.

9. Vorrichtung nach Anspruch 8, **dadurch gekennzeichnet, dass** sie zwei Plasmaquellen mit nicht übertragenem Bogen (8, 9) umfasst, die jeweils auf einer seitlichen Öffnung der Schmelzkammer (1) angeordnet sind, wobei die Quellen dazu bestimmt sind, Plasmastachel auszugeben, die auf asymmetrische Weise auf das Schmelzbad (6) stoßen, um das Schmelzbad (6) durchzumischen.

10. Vorrichtung nach Anspruch 8, **dadurch gekennzeichnet, dass** die Öffnungen (24) auf regelmäßige oder nicht regelmäßige Weise entlang einer senkrechten Achse (25) verteilt sind, wobei die senkrechte Achse (25) zwischen einer der Plasmaquellen (8, 9) der Schmelzkammer (1) und dem Einführanschluss (3) für den zu behandelnden zerkleinerten Füllstoff (5) angeordnet sind.

11. Vorrichtung nach einer dem Ansprüche 8 bis 10, **dadurch gekennzeichnet, dass** die Plasmaquellen mit nicht übertragenem Bogen (8, 9) auf der Schmelzkammer (1) derart angeordnet sind, dass die von den Quellen (8, 9) ausgegebenen Plasmastachel (15, 16) in die Richtung des Bereichs des Schmelzbads (6) gesendet werden, in dem der zu behandelnde zerkleinerte Füllstoff fällt.

12. Vorrichtung nach einem der Ansprüche 8 bis 11, **dadurch gekennzeichnet, dass** sie Messgeräte zum Kontrollieren des Schmelzbads (6) umfasst, um mindestens einem Betreiber zu erlauben, in Realzeit die durch die Plasmaquellen (8, 9) erzeugte Plasmaleistung zu steuern.

13. Vorrichtung nach einem der Ansprüche 8 bis 12, **dadurch gekennzeichnet, dass** die Veredlungs- und Fließkammer (26) gegenüber vom Einführanschluss (3) für den zu behandelnden zerkleinerten Füllstoff (5) platziert ist.

14. Vorrichtung nach einem der Ansprüche 8 bis 13, **dadurch gekennzeichnet, dass** sie fortlaufend Einführmittel (2) zum zu behandelnden zerkleinerten Füllstoff (5) umfasst, die mit dem Einführanschluss (3) verbunden sind.

15. Vorrichtung nach einem der Ansprüche 8 bis 14, **dadurch gekennzeichnet, dass** die Plasmaquellen (8, 9, 30) auf den Öffnungen derart angebracht sind, dass der Plasmastachel, der von jeder der Quellen ausgegeben wird, in einem Winkel zwischen 15 und 30 ° in Bezug auf eine waagrechte Ebene geneigt ist.

16. Vorrichtung nach einem der Ansprüche 8 bis 15, **dadurch gekennzeichnet, dass** die Veredlungs- und Fließkammer (26) eine Fließöffnung (28) enthält, die durch einen Verschluss (29) abgedichtet ist.

17. Verwendung der Vorrichtung nach einem der Ansprüche 8 bis 16 zur Behandlung von Abfällen, die Asbest umfassen.

## Claims

1. Method for inerting toxic products by plasma melting, **characterised in that** it comprises the following steps:
a) a vitrifiable ground load (5) to be treated in a melt bath (6) is introduced continuously, said ground load (5) falling via gravity into said bath, said bath (6) being placed in a melting chamber (1) having an internal volume bounded by walls covered at least partially by refractory elements,
b) at least one plasma jet (15, 16) is directly sent into said melt bath (6), said plasma jet being in addition directed along a propagation axis (17, 18) lying out of the vertical plane (P) containing the normal (19) to the wall at the point of intersection (20) between said propagation axis (17, 18) and said wall (4) and said plasma jet being sent in an inclined manner to said melt bath and sloping in order to stir said melt bath, each plasma jet (15, 16) being generated by a non-transferred arc plasma source (8, 9) mounted on said melting chamber (1),
c) at least one part of the melt bath (6) is sent to a refining bath (27), said refining bath (27) being placed in a refining and casting chamber (26) in communication in its upstream part with said melting chamber (1), said refining and casting chamber (26) having an internal volume bounded by walls covered at least partially by refractory elements,
d) a plasma jet (31) is sent directly into the refining bath (27) to the upstream part of said refining and casting chamber (26) in communication with said melting chamber (1) in order to repel towards the melt bath (6) any unmelted elements, said plasma jet (31) being generated by a non-transferred arc plasma source (30) mounted in the downstream part of said refining and casting chamber (26), and
e) tangentially to the walls (4) of the melting chamber (1), over at least one part of these walls, a gaseous oxidising fluid at ambient temperature is injected.

2. Method according to claim 1, **characterised in that** the plasma jet generated by each one of said plasma sources (8, 9) mounted on said melting chamber (1) is oriented in the direction of the zone of said melt bath (6) where said ground loads to be treated fall.

3. Method according to claim 1 or 2, **characterised in that** the zone of impact of each plasma jet with said melt bath (6) is separated from the walls of said melting chamber (1) by a distance that makes it possible to prevent the generating of hot spots on said walls.

4. Method according to any of claims 1 to 3, **characterised in that** said ground load (5) to be treated is formed beforehand in the step a) by grinding of a mixture of waste of which the composition makes it possible to minimise the melting temperature of this mixture.

5. Method according to any of claims 1 to 4, **characterised in that** the plasma jet (31) generated by said plasma source (30) mounted in the downstream part of said refining and casting chamber (26) is sent along an axis (33) centred on the communication orifice between said refining and casting chamber (26) and said melting chamber (1).

6. Method according to claim 1, **characterised in that** said gaseous oxidising fluid is directed to the part of the melting chamber (1) where the ground load (5) to be treated is introduced.

7. Method according to claim 1 or 6, **characterised in that** the temperature of the melt bath (6) is measured and the plasma power generated by said plasma sources mounted on said melting chamber (1) is minimised while still maintaining a melting temperature of said bath.

8. Device for implementing the method for inerting toxic products by plasma melting according to any of claims 1 to 7, comprising a melting chamber (1) having an internal volume bounded by walls (4), said walls being at least partially covered with refractory elements, said chamber comprising a port for introducing (3) a vitrifiable ground load (5) to be treated, **characterised in that** it comprises:
- at least one non-transferred arc plasma source (8, 9) designed to generate a plasma jet (15, 16), said plasma source (8, 9) being connected to a lateral opening of said chamber (1),
- said plasma source (8, 9) being mounted on said melting chamber (1) in such a way that said plasma jet (15, 16) emitted by said source is inclined towards the lower part of said chamber (1) intended to receive a melt bath (6) and propagates along a propagation axis (17, 18) lying out of the vertical plane (P) containing the normal (19) to the wall at the point of intersection (20) between said propagation axis (17, 18) and said wall (4) and in such a way that said plasma jet (15, 16) emitted by said source is sent in a way that is inclined towards the lower part of said chamber intended to receive a melt bath and sloped to stir said melt bath (6),
- said melting chamber (1) is in fluid communication with the upstream part of a refining and casting chamber (26), said refining and casting chamber (26) having an internal volume bounded by walls covered at least partially by refractory elements, said refining and casting chamber (26) being intended to receive a refining bath (27),
- said refining and casting chamber (26) comprises in its downstream part an opening to which is connected a non-transferred arc plasma source (30), said source being mounted in such a way as to emit a plasma jet (31) that is inclined towards the lower part of said refining and casting chamber (26) in order to strike said refining bath (27) directly in the upstream part of said refining and casting chamber (26) in such a way as to repel any unmelted elements towards said melt bath (6), and
- said melting chamber (1) comprises orifices for injecting (24) a gaseous oxidising fluid, said orifices (24) being connected to a circuit for injecting said gaseous oxidising fluid and being oriented in such a way that said gaseous oxidising fluid is injected tangentially to the lateral wall (4) of said chamber in the direction of the part 20 of the melting chamber (1) comprising said port for introducing (3) a ground load (5) to be treated.

9. Device according to claim 8, **characterised in that** it comprises two non-transferred arc plasma sources (8, 9) each mounted on a lateral opening of said melting chamber (1), said sources being intended to emit plasma jets striking said melt bath (6) asymmetrically in order to stir said melt bath (6).

10. Device according to claim 8, **characterised in that** said orifices (24) are distributed, regularly or not, along a vertical axis (25), said vertical axis (25) being placed between one of said plasma sources (8, 9) of the melting chamber (1) and said port for introducing (3) the ground load (5) to be treated.

11. Device according to any of claims 8 to 10, **characterised in that** said non-transferred arc plasma sources (8, 9) are mounted on the melting chamber (1) in such a way that said plasma jets (15, 16) emitted by said sources (8, 9) are sent in the direction of the zone of said melt bath (6) where said ground loads to be treated fall.

12. Device according to any of claims 8 to 11, **characterised in that** it comprises measuring devices in order to check said melt bath (6) in order to allow at least one operator to control in real time the plasma power generated by said plasma sources (8, 9).

13. Device according to any of claims 8 to 12, **characterised in that** the refining and casting chamber (26) is placed opposite the port for introducing (3) said ground load (5) to be treated.

14. Device according to any of claims 8 to 13, **characterised in that** it comprises means for continuously introducing (2) said ground load (5) to be treated connected to said port for introducing (3).

15. Device according to any of claims 8 to 14, **characterised in that** said plasma sources (8, 9, 30) are mounted on said openings in such a way that said plasma jet emitted by each one of said sources is inclined by an angle between 15 and 30° with respect to a horizontal plane.

16. Device according to any of claims 8 to 15, **characterised in that** said refining and casting chamber (26) comprises a casting orifice (28) closed off by a shutter (29).

17. Use of the device according to any of claims 8 to 16 for the treatment of waste comprising asbestos.
